(19) Europäisches Patentamt
European Patent Office
Office européen des brevets

(11) Publication number: **0 018 741**
**A2**

# (12) EUROPEAN PATENT APPLICATION

(21) Application number: 80301188.1

(22) Date of filing: 15.04.80

(51) Int. Cl.³: C 07 C 87/14
C 07 C 85/08, C 07 C 85/18

(30) Priority: 08.05.79 GB 7915856

(43) Date of publication of application: 12.11.80 Bulletin 80/23

(84) Designated Contracting States: BE CH DE FR GB IT LI NL SE

(71) Applicant: IMPERIAL CHEMICAL INDUSTRIES LIMITED
Imperial Chemical House Millbank
London SW1P 3JF(GB)

(72) Inventor: Joy, David Richard
16, Watchgate
Nunthorpe, Middlesbrough Cleveland(GB)

(74) Representative: Martin, David Lincoln et al,
Imperial Chemical Industries Limited Legal Department
: Patents Thames House North Millbank
London SW1P 4QG(GB)

## (54) Long chain amine derivatives and process for their preparation.

(57) The invention relates to alkylated diamine compounds

having the formula 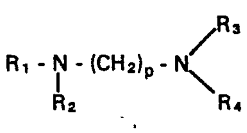

where $R_1$, $R_2$, $R_3$ and $R_4$, which may be the same or different, are selected from hydrogen and from alkyl groups containing from 8 to 30 carbon atoms with the proviso that at least one of $R_1$, $R_2$, $R_3$ and $R_4$ is not hydrogen, and where p is an integer in the range 2 to 12. In preferred embodiments one or more of $R_1$, $R_2$, $R_3$ and $R_4$ are long chain alkyl groups containing 13 or 15 carbon atoms, the amount of branching being in the range 30 to 70%, and the integer p is 6. The alkylated diamine compounds are conveniently prepared by reaction of one or more aldehydes R.CHO where R is $R_1$, $R_2$, $R_3$ and or $R_4$ with an $\alpha$,w diamine and the compounds may be used for example as bitumen adhesion agents.

EP 0 018 741 A2

TITLE MODIFIED
see front page



Long Chain Amine Derivatives

THIS INVENTION relates to alkylated amines, to compositions based on these amines and to the manufacture and use of these amines and compositions.

Compositions based on long chain amines and their derivatives have been proposed for a wide variety of uses, for example as fabric softening agents and as emulsifiers. However, such prior art compositions have not always been entirely satisfactory, for example because their degree of effectiveness is less than might be disired or because they are difficult to handle.

We have now surprisingly found that certain long chain diamine derivatives and compositions based on them have some advantageous properties and a wide variety of uses.

Accordingly, the present invention comprises alkylated diamine compounds having the formula:

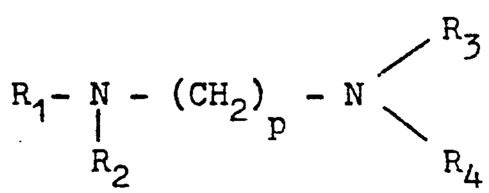

where $R_1$, $R_2$, $R_3$ and $R_4$ which may be the same or different, are selected from hydrogen and from alkyl groups containing from 8 to 30 carbon atoms, preferably 12 to 18 carbon atoms, with the proviso that at least one of $R_1$, $R_2$, $R_3$ and $R_4$ is not hydrogen, and where p is an integer in the range 2 to 12, preferably in the range 2 to 6.

In preferred embodiments of this invention, one or more of the substituents $R_1$, $R_2$, $R_3$ and $R_4$ comprise(s) long chain alkyl groups containing 13 or 15 carbon atoms, the amount of branching being in the range 30 to 70%. In particularly preferred embodiments of the invention, the integer p is six.

Particularly preferred embodiments of this invention include compounds of formula:

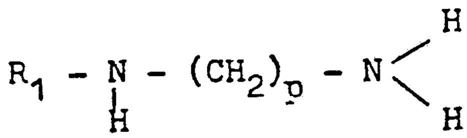

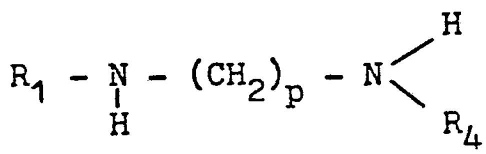

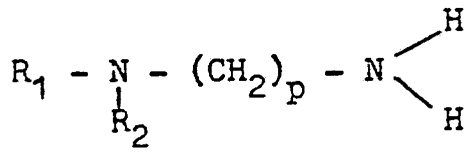

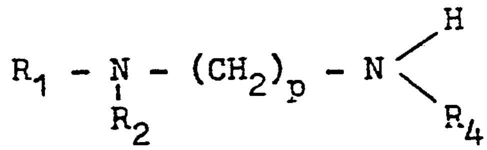

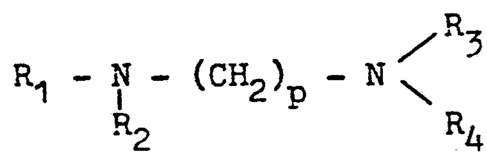

The alkylated diamine compounds according to this invention are conveniently prepared by reaction of one or more aldehydes R.CHO, where R is $R_1$, $R_2$, $R_3$ and/or $R_4$, with an α,w diamine, for example hexamethylenediamine in the presence of a suitable catalyst for example a hydrogenation catalyst, for example nickel. The product N-alkyl diamines obtained will depend on the aldehyde(s) used and also on the ratio of aldehyde(s) to α,w diamine in the reaction mixture. It is convenient to carry out the preparation of the alkylated diamine compounds in a suitable solvent. Methanol, for example, is particularly suitable since not only is it readily miscible with water and usually with the diamine products but it is also readily separable by distillation from water and the products.

A suitable method for preparing alkyl-1,3-propane diamine compounds of this invention (i.e. p=3 in the formula 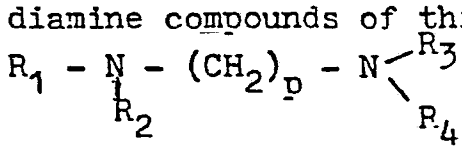 ) involves adding a primary or secondary alkyl amine to acrylonitrile followed by hydrogenation of the resultant nitrile. The diamines obtained will generally have hydrogen atoms as $R_3$ and $R_4$ but

alkyl substitution in these positions can be achieved by further reaction, for example with aldehydes.

The products of this invention are useful in a number of ways, for example as adhesion agents for bitumen, as bitumen emulsifiers, corrosion inhibitors, and fabric softeners.

The compounds of this invention, their preparation and use are further illustrated in the following Examples:

EXAMPLES 1 TO 3

A number of compounds according to this invention were prepared using the following general method. Hexamethylenediamine, methanol and a catalyst were heated in an autoclave under hydrogen. A mixture of $C_{13}$ to $C_{15}$ aldehydes was added over a period of time and the reaction mixture was then stirred at constant temperature and pressure for a further period. (The mixture of $C_{13}$ and $C_{15}$ aldehydes had the composition (all parts by weight)):

| | |
|---|---|
| Hydrocarbons | 1.0% |
| $C_{11}$ aldehydes | 1.4% |
| $C_{13}$ aldehydes | 66.5% |
| $C_{15}$ aldehydes | 31.2% |
| Unidentified heavy ends | 1.9% |

After cooling, the product was filtered and the methanol was removed by evaporation at reduced pressure. Excess hexamethylenediamine was removed by distillation under reduced pressure.

A summary is given in Table 1 of the quantities of reactants, reaction conditions and product analysis for three preparative runs.

TABLE 1

| Example No | Weight HMD(g) | Weight Methanol (g) | Catalyst | Weight Catalyst (g) | Weight Aldehyde (g) | Pressure (psig) | Temp (°C) |
|---|---|---|---|---|---|---|---|
| 1 | 348 | 410 | "Nicat" 101 | 21.4 | 312 | 435 | 110 |
| 2 | 116 | 205 | 55/5TS | 21.4 | 208 | 115 ats g | 110 |
| 3 | 1324 | 5701 | 55/5TS | 28.5 | 2472 | 420 | 110 |

(Continued below)

| Example No | Aldehyde addition time(min) | Extra Reaction time (min) | ANALYSIS % W/W | | | |
|---|---|---|---|---|---|---|
| | | | Primary amine | Secondary amine | Tertiary amine | Imino Compound |
| 1 | 120 | 30 | 26 | 42 | 7 | 16 |
| 2 | 120 | 30 | 21 | 57 | 11 | 6 |
| 3 | 120 | 30 | 14 | 40 | 20 | 6 |

NOTES:-

HMD is hexamethylenediamine

"Nicat" 101 is a Raney Nickel catalyst supplied by Joseph Crosfield & Sons

55/5TS is a 55% nickel on kieselguhr catalyst manufactured by Ruhrchemie AG and marketed by Farbwerke Hoechst AG

TABLE 1 (Continued)

PRODUCT ANALYSIS:-

Primary amine as $NH_2$ $(CH_2)_3$ -

Secondary amine as ($C_{13-15}$ alkyl) NH $(CH_2)_3$ -

Tertiary amine as ($C_{13-15}$ alkyl$)_2$ N $(CH_2)_3$ -

Imino compound (by-product) as ($C_{13-15}$ alkyl) = N $(CH_2)_3$ -

Nuclear magnetic resonance and infrared spectra were consistent with the presence of these species

EXAMPLE 4

200g of 200 penetration low acid value bitumen was heated to 80°C. To this was added 0.24g of the product of Example 1 and the mixture was stirred. Part of this treated bitumen was placed in a lightly stoppered flask and heated at 135°C for 5 days.

300g of washed and dried granite chippings from the Mountsorrel quarry, Leicestershire which passed 3/4" but were retained on 1/2" B.S. sieve were placed in a glass beaker and heated to 60°C. The treated bitumen (15g) was heated to 100°C and added to the chippings. The mixture was stirred for 5 minutes to ensure that no uncoated spots remained on any chipping. The coated chippings were immediately thereafter placed in a glass jar, covered and allowed to stand for 30 minutes at room temperature. After this time sufficient demineralised water was added to cover the chippings to a depth of about 10mm and the mixture was maintained at 40°C for 3 hours. The percentage of stones coated with bitumen was then estimated to the nearest 5%. The test was repeated with bitumen which had not been heat-treated.

For comparison, the test was repeated using bitumen containing 0.12% N-tallowalkylpropane diamine and using bitumen containing no adhesion agent.

The results of all these tests are summarised in Table 2, the figures being percentages of coated area on the chippings.

TABLE 2

| | Compound of Example 1 | N-tallowalkylpropane diamine | No additive |
|---|---|---|---|
| Bitumen not heat-treated | 100 | 95 | 70 |
| Bitumen heat treated | 100 | 90 | 60 |

EXAMPLE 5

To 1Kg of a mixture of $C_{13}$ and $C_{15}$ primary alkyl amines known as Synprolam 35 (Registered Trade Mark) at 70°C was added 254g acrylonitrile over a period of 3 hours. The amine mixture comprised approximately 65 to 75% $C_{13}$ and approximately 35 to 25% $C_{15}$ amines (these percentages being calculated on the total of long chain alkyl groups) with approximately 40 to 55 wt% straight chain and 60 to 45 wt% 2-alkyl branched chain where the 2-alkyl group is predominantly methyl. The mixture of amines and acrylonitrile was maintained at 70°C for a further 2 hours. The resultant nitrile (1.25Kg) was warmed with 347g ammonia and 55g Raney nickel catalyst ("Nicat" 101 supplied by Joseph Crosfields and Sons Ltd) in 460g methanol to 120°C and the pressure was raised to 90 atmospheres using hydrogen. After five hours, the liquid reaction product was cooled and analysed by potentiometric titration as 98% alkyl-1,3-propane diamine (as molecular weight 266).

Four 50g samples of dried granite chippings from the Mountsorrel quarry, Leicestershire which passed a $\frac{3}{8}$ inch sieve but which were retained by a $\frac{1}{4}$ inch sieve were weighed into four 250ml beakers. Distilled water (2.5g) was added to each sample and the chippings agitated until thoroughly wet. To each sample was added 4g of bitumen emulsion and the samples were left to cure at room temperature for 1, 2, 3 and 4 hours respectively. After curing, each sample was allowed to stand for 4 hours in 10ml of distilled water. A visual assessment was made of the extent of bitumen coverage on the chippings. Emulsions giving 100% coverage after 1, 2, 3 and 4 hours were described respectively as quick, fast, medium, and slow breaking.

As in Example 4, a comparison test was carried out using N-tallowalkylpropane diamine. The results are shown in Table 3.

TABLE 3

| EMULSIFIER | | | BITUMEN* | | Distilled water (pbw) | Conc HCL (pbw) | Calcium Chloride (pbw) | Rate of break |
|---|---|---|---|---|---|---|---|---|
| | Appearance | Parts by weight | Type | Parts by weight | | | | |
| Compound of Example 5 | Liquid | 0.24 | 200 PEN 'E' GRADE | 60 | 39.56 | 0.072 | 0.128 | Quick |
| N-tallowalkyl propane-1,3,-diamine | Solid | 0.24 | 200 PEN 'E' GRADE | 60 | 39.56 | 0.071 | 0.128 | Quick |

The performance of the compound of Example 5 is as good as that of the tallow diamine but the compound of Example 5 has the very important advantage, as far as handling and ease of use are concerned, that it is liquid not solid.

DLM/JH

Claims

1. Alkylated diamine compounds having the formula:

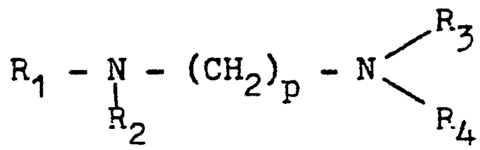

where $R_1$, $R_2$, $R_3$ and $R_4$ which may be the same or different, are selected from hydrogen and from alkyl groups containing from 8 to 30 carbon atoms, with the proviso that at least one of $R_1$, $R_2$, $R_3$ and $R_4$ is not hydrogen, and where p is an integer in the range 2 to 12.

2. Alkylated diamine compounds as claimed in claim 1 where $R_1$, $R_2$, $R_3$ and $R_4$ are selected from hydrogen and alkyl groups containing from 12 to 18 carbon atoms.

3. Alkylated diamine compounds as claimed in claim 1 or 2 where p is an integer in the range 2 to 6.

4. Alkylated diamine compounds as claimed in any one of claims 1 to 3 where one or more of the substituents $R_1$, $R_2$, $R_3$ and $R_4$ comprise(s) long chain alkyl groups containing 13 or 15 carbon atoms, the amount of branching being in the range 30 to 70%.

5. A process for preparing an alkylated diamine compound as defined in claim 1 which process comprises reacting one or more aldehydes R.CHO, where R is $R_1$, $R_2$, $R_3$ and/or $R_4$, as defined in claim 1, with and α,w diamine in the presence of a hydrogenation catalyst.

6. A process as claimed in claim 5 wherein $R_1$, $R_2$, $R_3$ and $R_4$ are as defined in either of claims 2 and 4.

7. A process as claimed in claim 5 for preparation of a compound of formula

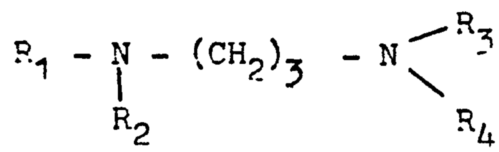

comprising adding a primary or secondary alkyl amine to acrylonitrile followed by hydrogenation of the resultant nitrile.